# EUROPEAN PATENT APPLICATION

(11) **EP 2 752 753 A2**
(43) Date of publication of application: **09.07.2014**
(21) Application number: 13194737.6
(22) Date of filing: 28.11.2013
(51) Int. Cl.: G06F 3/0488

(54) **Terminal and method for operating the same**

(30) Priority: 02.01.2013 KR 20130000291; 07.05.2013 KR 20130051402
(71) Applicant: Samsung Display Co., Ltd., Yongin-City, Gyeonggi-Do, 446-711 (KR)
(72) Inventor: Jang, Min Jun, Seoul (KR); Kim, Hong Bo, Seoul (KR)
(74) Representative: Gulde & Partner

(57) **Abstract**

A terminal (100) includes a button (110), a touch screen (120) for receiving a touch input from an outside and displaying a display screen, and a controller (140) controlling the display screen of the touch screen (120) in accordance with a state of the button (110) and the received touch input, the state of the button (110) being pressed or press-released, wherein if a press or a press release of the button (110) is sensed, the controller (140) displays an operation region (125) having a size that is smaller than a size of the display screen, and wherein, if the touch input is at a first point within the operation region (125), the controller (140) is configured to execute a same operation as an operation executed in response to a touch input at a second point corresponding to the first point, the second point being within an entire region of the display screen of the touch screen (120).

## Description

### BACKGROUND

### 1. Field

Example embodiments relate to a terminal and a method for operating the same. More particularly, example embodiments relate to a terminal and a method for operating the same, which enable a user to operate the terminal more easily.

### 2. Description of the Prior Art

With the development of information communication technology and in compliance with the demand for diversified information society, a terminal, e.g., a personal computer, a smart phone, a mobile terminal, a portable electronic device, or the like, has been spread at high speed. For example, a user can input data to a terminal using various kinds of input devices, e.g., a keyboard, a mouse, a track ball, a stylus pen, a touch screen, and/or a button.

A graphic user interface ("GUI") refers to an environment in which a user can perform an operation through a screen, on which graphics are displayed when the user exchanges information with an electronic device. With the development of electronic devices, various kinds of terminals require that user's operations adopt the GUI, and perform input/output operations through the GUI.

### SUMMARY

Example embodiments provide a terminal and a method for operating the same, which enable a user to operate the terminal more easily.

Example embodiments also provide a terminal and a method for operating the same, which enable a user to operate a screen that corresponds to the whole region of a touch screen, even through an operation within a specific region of the touch screen of the terminal.

Example embodiments also provide a terminal and a method for operating the same, which enable a user to operate a screen that is displayed within a region which the user's thumb is unable to reach using the thumb of the user's hand that grasps the terminal.

According to an aspect of the example embodiments, there is provided a terminal, including a button, a touch screen configured to receive a touch input from an outside and to display a display screen, and a controller configured to control the display screen of the touch screen in accordance with a state of the button and the received touch input, the state of the button being pressed or press-released, wherein if a press or a press release of the button is sensed, the controller is configured to display on the display screen of the touch screen an operation region having a size that is smaller than a size of the display screen, and wherein, if the touch input is at a first point within the operation region, the controller is configured to execute a same operation as an operation executed in response to a touch input at a second point corresponding to the first point, the second point being within an entire region of the display screen of the touch screen.

A relative position of the first point to the operation region may be substantially the same as a relative position of the second point to the whole region of the touch screen.

A boundary of the operation region and a boundary of the touch screen may be in a rectangular shape, and if coordinates of a lower left corner of the operation region are (x1, y1), coordinates of an upper right corner of the operation region are (x1', y1'), coordinates of the first point are (a1, b1), coordinates of a lower left corner of the touch screen are (x2, y2), coordinates of an upper right corner of the touch screen are (x2', y2'), and coordinates of the second point are (a2, b2), a ratio of (x1' - x1) to (a1 - x1) is substantially the same as a ratio of (x2' - x2) to (a2 - x2), and a ratio of (y1' - y1) to (b1 - y1) is substantially the same as a ratio of (y2' - y2) to (b2 - y2).

If the press of the button is sensed, the controller may display the operation region, and if the press release of the button is sensed, the controller may not display the operation region.

The controller may toggle whether to display the operation region whenever the press release of the button is sensed.

According to another aspect of the example embodiments, there is provided a terminal, which includes a button, a touch screen receiving a touch input from an outside and displaying a screen, and a controller controlling the screen displayed on the touch screen in accordance with whether the button is pressed and the received touch input, wherein if a press or a press release of the button is sensed, the controller displays an operation region having a size that is smaller than a size of the touch screen on the touch screen and displays a cursor on the touch screen, if a drag from a first point in the operation region to a second point in the operation region is received, the controller moves the displayed cursor, and if the touch input is received on a third point in the operation region, the controller executes the same operation as an operation that is executed in the case where the touch input is made at a point where the moved cursor is positioned.

The controller may move the cursor as long as a distance that corresponds to a distance of the received drag in a direction that corresponds to a direction of the received drag.

If coordinates of the first point are (x1, y1) and coordinates of the second point are (x2, y2), the controller may move the cursor as long as a first distance of (x2 - x1) with respect to an x axis and move the cursor as long as a second distance of (y2 - y1) with respect to a y axis.

According to still another aspect of the example embodiments, there is provided a terminal, which includes a button, a touch screen receiving a touch input from an outside and displaying a screen, an attitude sensor measuring attitude information, and a controller controlling the screen displayed on the touch screen in accordance with whether the button is pressed, the received touch input, and the measured attitude information, wherein the attitude sensor measures the attitude information of the terminal if a press or a press release of the button is sensed, and the controller scrolls the screen displayed on the touch screen based on the measured attitude information, and if the touch input is received at a certain point in the touch screen, the controller executes an operation with respect to the point where the touch input is made.

The controller may detect a rotating angle and a rotating direction of the terminal based on a vertical direction using the measured attitude information, and the controller may scroll the screen at a specific speed and in a specific direction based on the detected rotating angle and rotating direction.

The controller may scroll the screen at a higher speed as the detected rotating angle becomes larger.

The controller may not scroll the screen if the detected rotating angle is smaller than a specific angle, but may scroll the screen if the detected rotating angle is equal to or larger than the specific angle.

The touch screen may be in a rectangular shape, and the controller may scroll the screen in a direction of a vector sum of a vector which is directed from a first side of four sides included in the touch screen to a second side that faces the first side and is positioned at a height that is lower or equal to the first side and a vector which is directed from a third side of the two sides that are adjacent to the first side to a fourth side that faces the third side and is positioned at a height that is lower than or equal to the third side.

According to still another aspect of the example embodiments, there is provided a terminal, which includes a button, a touch screen receiving a touch input from an outside and displaying a screen, and a controller controlling the screen displayed on the touch screen in accordance with whether the button is pressed and the received touch input, wherein if a press or a press release of the button is sensed, the controller displays a window for displaying a part of the screen displayed on the touch screen on the touch screen, if a drag from a first point in a region where the moved window is arranged to a second point in the touch screen is received, the controller moves the displayed window, and if the touch input is received at a third point in a region where the moved window is arranged, the controller executes an operation with respect to a point where the touch input is made.

The window may display the screen that corresponds to a specific region of the screen which is to be displayed unless the window is displayed on the touch screen.

If coordinates of the first point are (x1, y1) and coordinates of the second point are (x2, y2), the controller may move the window as long as a first distance of (x2 - x1) with respect to an x axis and move the cursor as long as a second distance of (y2 - y1) with respect to a y axis.

According to still another aspect of the example embodiments, there is provided a method for operating a terminal including a button and a touch screen, which includes sensing a press or a press release of the button, displaying an operation region having a size that is smaller than a size of the touch screen on the touch screen, receiving a touch input at a first point in the operation region, and executing the same operation as an operation that is executed in the case where the touch input is made on a second point that corresponds to the first point in the whole region of the touch screen.

According to still another aspect of the example embodiments, there is provided a method for operating a terminal including a button and a touch screen, which includes sensing a press or a press release of the button, displaying an operation region having a size that is smaller than a size of the touch screen on the touch screen, displaying a cursor on the touch screen, receiving a drag from a first point in the operation region to a second point in the operation region, moving the displayed cursor, receiving a touch input at a third point in the operation region, and executing the same operation as an operation that is executed in the case where the touch input is made at a point where the moved cursor is positioned.

According to still another aspect of the example embodiments, there is provided a method for operating a terminal including a button and a touch screen, which includes sensing a press or a press release of the button, measuring attitude information of the terminal, scrolling a screen that is displayed on the touch screen based on the measured attitude information, receiving a touch input at a certain point in the touch screen, and executing an operation with respect to the point where the touch input is made.

According to still another aspect of the example embodiments, there is provided a method for operating a terminal including a button and a touch screen, which includes sensing a press or a press release of the button, displaying a window for displaying a part of a screen that is displayed on the touch screen on the touch screen, receiving a drag from a first point in a region where the window is arranged to a second point in the touch screen, moving the displayed window, receiving a touch input at a third point in a region where the moved window is arranged, and executing an operation with respect to a point where the touch input is made.

According to still another aspect of the example embodiments, there is provided a terminal, which includes a touch screen receiving a touch input from an outside and displaying a screen, and a controller controlling the screen displayed on the touch screen in accordance with the received touch input, wherein the controller displays a cursor on the touch screen, if a drag from a first point on the touch screen to a second point on the touch screen is received, the controller moves the displayed cursor, and if the touch input is received on a third point on the touch screen, the controller executes the same operation as an operation that is executed in the case where the touch input is made at a point where the moved cursor is positioned.

According to still another aspect of the example embodiments, there is provided a terminal, which includes a button, a touch screen receiving a touch input from an outside and displaying a screen, and a controller controlling the screen displayed on the touch screen in accordance with whether the button is pressed and the received touch input, wherein if a press or a press release of the button is sensed, the controller displays a cursor on the touch screen and displays an operation support object on the touch screen, if a drag of the operation support object is received, the controller moves the displayed cursor, and if the touch input is received on the operation support object, the controller executes the same operation as an operation that is executed in the case where the touch input is made at a point where the moved cursor is positioned.

The operation support object may include a first sub-object and a second sub-object, and if a drag of the first sub-object is received, the controller may move the displayed cursor, and if the touch input is received on the second sub-object, the controller may execute the same operation as the operation that is executed in the case where the touch input is made on the point where the moved cursor is positioned.

According to still another aspect of the example embodiments, there is provided a method for operating a terminal including a button and a touch screen, which includes sensing a press or a press release of the button, displaying a cursor on the touch screen, displaying an operation support object on the touch screen, receiving a drag of the operation support object, moving the displayed cursor, receiving a touch input on the operation support object, and executing the same operation as an operation that is executed in the case where the touch input is made at a point where the moved cursor is positioned.

The operation support object may include a first sub-object and a second sub-object, and the receiving the drag of the operation support object may include receiving a drag of the first sub-object, and the receiving the touch input on the operation support object may include receiving the touch input on the second sub-object.

### BRIEF DESCRIPTION OF THE DRAWINGS

Features will become apparent to those of ordinary skill in the art by describing in detail exemplary embodiments with reference to the attached drawings, in which:
FIG. 1 illustrates a block diagram of a configuration of a terminal according to an embodiment;
FIG. 2 illustrates a plan view of an operation region of a touch screen of a terminal according to an embodiment;
FIG. 3 illustrates a flowchart of processes in a method for operating a terminal according to an embodiment;
FIG. 4 illustrates a plan view explaining a method for operating a terminal according to an embodiment;
FIG. 5 illustrates a plan view of a method for operating a terminal according to an embodiment;
FIG. 6 illustrates a plan view of a method for operating a terminal according to an embodiment;
FIG. 7 illustrates a plan view of a method for operating a terminal according to an embodiment;
FIG. 8 illustrates a flowchart of processes of a method for operating a terminal according to another embodiment;
FIG. 9 illustrates a plan view of a method for operating a terminal according to another embodiment;
FIG. 10 illustrates a flowchart of processes of a method for operating a terminal according to another embodiment;
FIG. 11 illustrates a plan view explaining a method for operating a terminal according to another embodiment;
FIG. 12 illustrates a flowchart of processes of a method for operating a terminal according to another embodiment;
FIG. 13 illustrates a plan view of a method for operating a terminal according to another embodiment;
FIG. 14 illustrates a plan view of processes of a method for operating a terminal according to another embodiment;
FIG. 15 illustrates a plan view of a method for operating a terminal according to another embodiment;
FIG. 16 illustrates a plan view of a method for operating a terminal according to another embodiment; and
FIG. 17 illustrates a plan view explaining a method for operating a terminal according to another embodiment of the example embodiments.

### DETAILED DESCRIPTION

Advantages and features of the example embodiments, and methods of accomplishing the same, may be understood more readily by reference to the following detailed description of preferred embodiments and the accompanying drawings. The example embodiments may, however, be embodied in many different forms and should not be construed as being limited to the embodiments set forth herein. Rather, these embodiments are provided so that this disclosure will be thorough and complete and will fully convey the concept of the invention to those skilled in the art, and the example embodiments will only be defined by the appended claims. Thus, in some embodiments, well-known structures and devices are not shown in order not to obscure the description of the embodiments with unnecessary detail. Like numbers refer to like elements throughout.

In the drawings, the thickness of layers and regions may be exaggerated for clarity. Further, it will be understood that when an element or layer is referred to as being "on" or "connected to" another element or layer, it can be directly on or connected to the other element or layer, or intervening elements or layers may be present. In contrast, when an element is referred to as being "directly on" or "directly connected to" another element or layer, there are no intervening elements or layers present. As used herein, the term "and/or" includes any and all combinations of one or more of the associated listed items.

Spatially relative terms, such as "below," "beneath," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

Embodiments described herein will be described referring to plan views and/or cross-sectional views by way of ideal schematic views of the invention. Accordingly, the exemplary views may be modified depending on manufacturing technologies and/or tolerances. Therefore, the embodiments of the invention are not limited to those shown in the views, but include modifications in configuration formed on the basis of manufacturing processes. Therefore, regions exemplified in figures have schematic properties and shapes of regions shown in figures exemplify specific shapes of regions of elements and not limit aspects of the invention.

Hereinafter, a terminal 100 and a method for operating the same according to preferred embodiments will be described in detail with reference to the accompanying drawings.

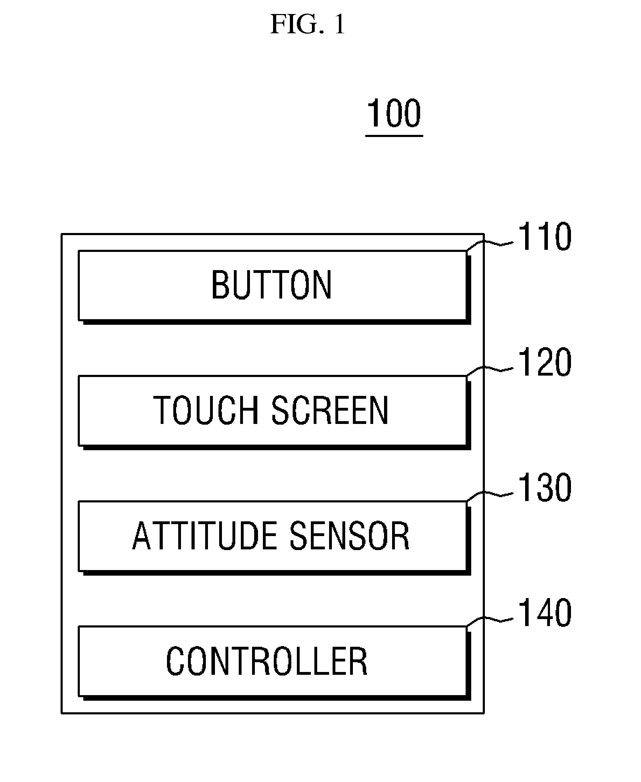

FIG. 1 illustrates a block diagram of the configuration of the terminal 100 according to an embodiment. The terminal 100 may be, e.g., a personal computer, a smart phone, a mobile terminal, a vehicle terminal, or a portable electronic device.

Referring to FIG. 1, the terminal 100 according to an embodiment may include a button 110, a touch screen 120 receiving a touch input from an outside and displaying a screen, an attitude sensor 130 measuring attitude information of the terminal 100, and a controller 140 controlling the screen displayed on the touch screen 120 in accordance with whether the button 110 is pressed, the touch input, and the measured attitude information.

The button 110 may be pressed or press-released by an operation of a user. For example, the button 110 may be toggled. In other words, the button 110 may be toggled in a pressed state or in a press-released state by the user's operation. The button 110 may be a hardware button arranged to be exposed on an external appearance, e.g., surface, of the terminal 100, or may be a software button that is displayed on the touch screen 120.

The touch screen 120 may receive a touch input from the outside. The touch screen 120 may receive an input through a user's, e.g., direct, touch. The touch input may include a touch event and a touch release event. The touch screen 120 may be, e.g., a pressure-sensitive touch screen, an electrostatic touch screen, or a combination thereof.

The touch screen 120 may display a screen. For example, the touch screen 120 may be a flat display device, e.g., an LCD (Liquid Crystal Display), an OLED (Organic Light Emitting Diode) display, or a PDP (Plasma Display Panel) display. The touch screen 120 may be, e.g., a flexible display.

The touch screen 120 may display a GUI (Graphic User Interface). The touch screen 120 may display, e.g., icons or a window. Further, the touch screen 120 may display contents of a document. The document may include, for example, a picture, a text, music, a moving image, or other objects. In the touch screen 120, a region for receiving the touch input and a region for displaying the screen may be substantially the same.

The attitude sensor 130 may measure the attitude, e.g., characteristics, information of the terminal 100 in a 3D space. The attitude sensor 130 may measure 3D attitudes, e.g., conditions, such as a tilt, a position, an acceleration, and an angular velocity of the terminal 100. The attitude sensor 130 may include at least one of an acceleration sensor, a gravity sensor, a tilt sensor, a geomagnetic sensor, and an infrared sensor.

The controller 140 may control the screen that is displayed on the touch screen 120 in accordance with the touch input received through the touch screen 120. For example, if a touch event or a touch release event is input through coordinates (x, y) of the touch screen 120, the controller 140 may execute an operation, e.g., selection or execution, with respect to a point that corresponds to the coordinates (x, y) of the screen that is displayed on the touch screen 120. The operation executed by the controller 140 may differ in accordance with an object displayed on the touch screen 120 at the point corresponding to the coordinates. For example, if an icon for a specific application is displayed at the point corresponding to the coordinates (x, y) of the screen displayed on the touch screen 120, the controller 140 may make an execution screen of the application displayed on the touch screen 120.

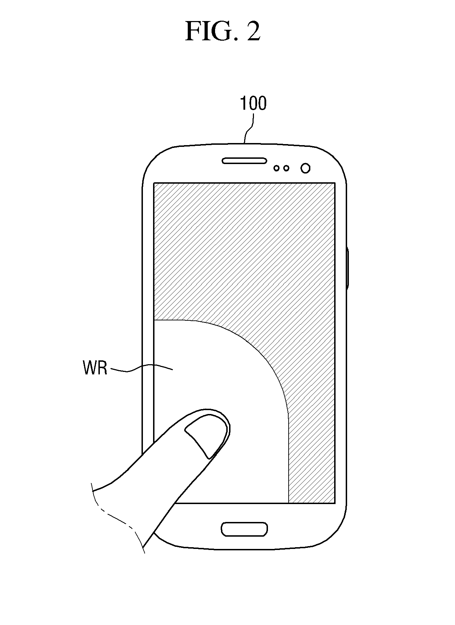

The controller 140 may control the screen displayed on the touch screen 120 in accordance with whether the button 110 is pressed and the attitude information measured by the attitude sensor 130, as will be described later with reference to FIGS. 2 to 15.

If the terminal 100 is, e.g., a mobile terminal, such as a smart phone, the user may use the terminal 100 in a state where the user holds the terminal 100 in one hand only. Further, the user may make the touch input using the thumb of the hand that grasps the terminal 100.

However, since the region for receiving the touch input and the region for displaying the screen in the touch screen 120 is substantially the same, the user may bear a great burden on the touch input in the case where the touch screen 120 has a large size. In other words, if the touch screen 120 of the terminal 100 has a large size, it may be difficult for the user to make the touch input on the whole region of the touch screen using only the thumb of the hand that grasps the terminal 100.

Hereinafter, a method for operating the terminal 100 according to an embodiment will be described in detail with reference to the accompanying drawings. According to the method for operating the terminal 100, the user can operate the screen that corresponds to the whole region of the touch screen 120 only through an operation within a specific region of the touch screen 120. Accordingly, even when using only the thumb of the hand that grasps the terminal 100, the user can easily operate the screen that corresponds to the whole region of the touch screen 120.

The terminal 100 according to an embodiment may be, e.g., a personal computer, a smart phone, a mobile terminal, a vehicle terminal, or a portable electronic device. However, for convenience in explanation, it is assumed that the terminal 100 is a mobile terminal. Further, embodiments to be described hereinafter can be applied to different kinds of terminals 100.

FIG. 2 illustrates a plan view of an operation region of the terminal 100 according to an embodiment. For example, referring to FIG. 2, the user may hold the terminal 100 using the left hand. Further, even in a state where the user conveniently holds the terminal 100, the user can make the touch input only in the white region WR of FIG. 2 using the thumb of the left hand. In other words, since it may be difficult for the thumb of the left hand of the user to stretch and reach the entire region of the touch screen 120, e.g., it may be difficult to extend the left thumb in order to reach both white and shaded regions in FIG. 2 while holding the terminal with the left hand, the touch input may be made by contacting only the white region of FIG. 2, i.e., a region smaller than the entire region of the touch screen 120. That is, the touch input region on the touch screen 120, i.e., the white region of FIG. 2, may be defined by an area accessible by a thumb of a same hand holding the terminal 100 while holding the terminal 100.

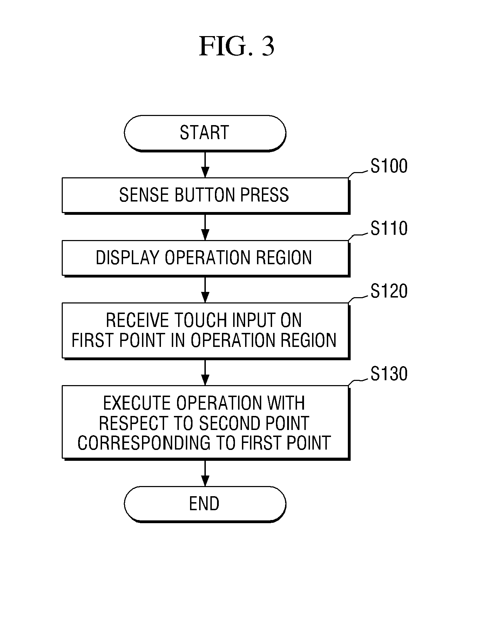

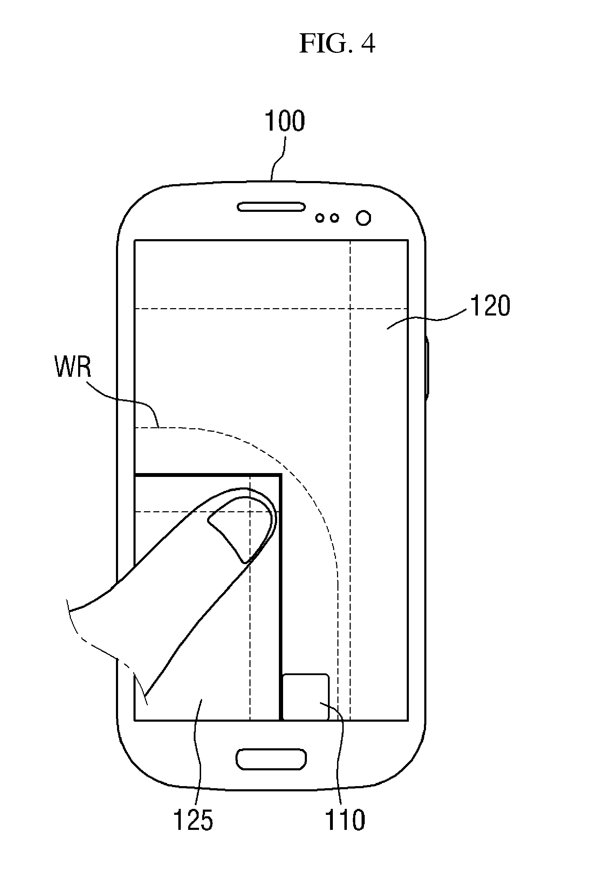

FIG. 3 illustrates a flowchart of processes of a method for operating the terminal 100 according to a first embodiment. FIGS. 4 to 7 are plan views explaining a method for operating the terminal 100 according to the first embodiment.

Referring to FIGS. 1 and 3, according to the method for operating the terminal 100, a press or a press-release of the button 110 may be first sensed (S100). Depending on embodiments, the following steps may be performed when the press of the button 110 is sensed or when the press-release of the button 110 is sensed after the press of the button 110 is performed.

For example, referring to FIG. 4, the terminal 100 according to the first embodiment may include a software button type button 110 that is displayed on the touch screen 120. As shown in FIG. 4, the button 110 may be arranged in the white region illustrated in FIG. 2. In other words, the button 110 may be arranged in a region of the touch screen 120, which the thumb of the user's hand that grasps the terminal 100 can reach naturally.

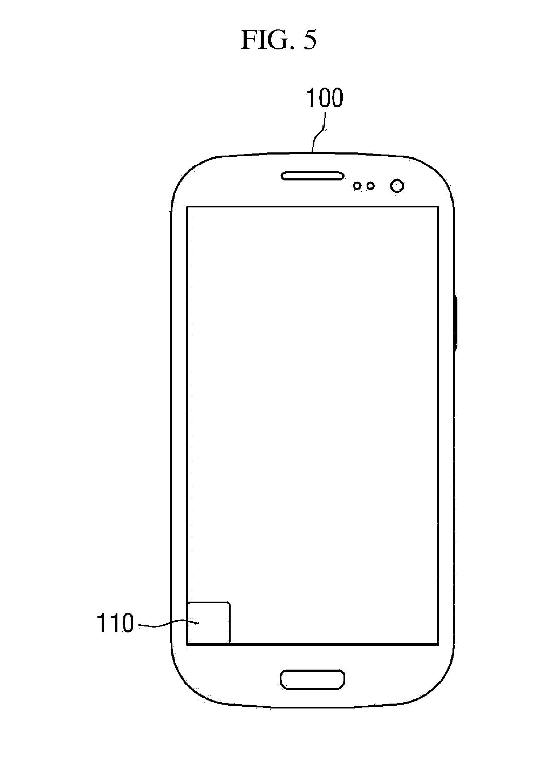

FIG. 4 illustrates the button 110 that is arranged in a lower center portion of the touch screen 120. However, the button 110 may be arranged in any place within the white region illustrated in FIG. 2. For example, as shown in FIG. 5, the button 110 may be arranged in a lower left corner portion of the touch screen 120. The position where the button 110 is arranged may differ depending on the embodiments, in which the position of the button 110 may be automatically or manually changed during the use of the terminal 100.

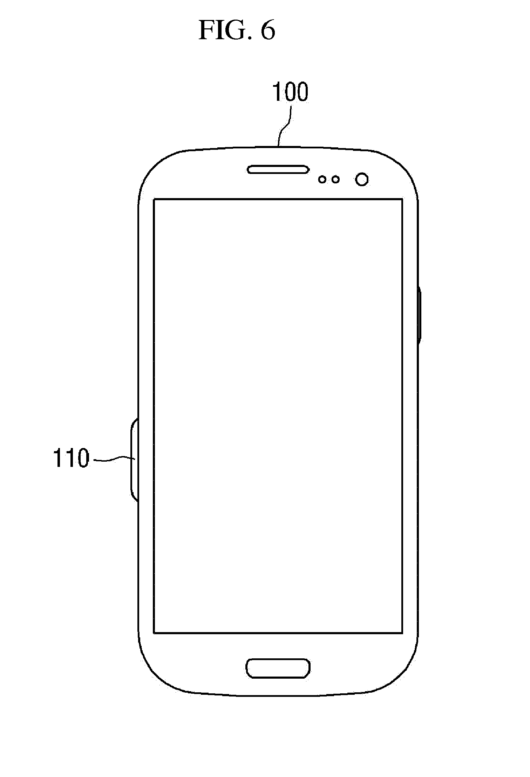

Further, as shown in FIG. 6, the button 110 may be a hardware button that is arranged to be exposed on the external appearance, e.g., surface, of the terminal 100. The hardware button type button 110 may be arranged in a region of an external appearance of the terminal 100, which the thumb of the user's hand that grasps the terminal 100 can reach naturally. Further, the hardware button type button 110 may be arranged in a region of an external appearance of the terminal 100, which at least one of the remaining fingers except for the thumb of the user's hand that grasps the terminal 100 can reach naturally.

The user of the terminal 100 can press the button 110 using the thumb of the hand that grasps the terminal 100. For example, referring to FIG. 4, the user may touch the button 110 displayed on the touch screen 120, and then release the touch. The touch screen 120 may sense the occurrence of a touch event and a touch-release event, and the terminal 100 may sense the press or the press release of the button 110.

For example, referring again to FIG. 3, an operation region 125 (FIG. 4) having a size that is smaller than the size of the touch screen 120 may be displayed (S 110). In another example, the size of the operation region 125 may be equal to the size of the touch screen 120. Further, as shown in FIG. 4, the operation region 125 may be arranged in the white region of FIG. 2. In other words, the operation region 125 may be arranged in a region of the touch screen 120, which the thumb of the user's hand that grasps the terminal 100 can reach naturally, e.g., without moving fingers of the grasping hand other than the thumb.

For example, the operation region 125 may be arranged to be substantially adjacent to the lower left corner of the touch screen 120, e.g., a left corner of the operation region 125 may overlap a left corner of the touch screen 120. However, the operation region 125 may also be arranged to be spaced apart from the corner of the touch screen 120 as long as the operation region 125 is within the white region WR of FIG. 2.

The operation region 125 may be displayed on the touch screen 120 so that the user can visually confirm the same. For example, as shown in FIG. 4, a boundary line of the operation region 125 (bold line in FIG. 4) and shading inside the operation region 125 may be displayed. In another example, the operation region 125 may be displayed semi-transparently or transparently. In yet another example, only the boundary line of the operation region 125 may be displayed. In other words, as the operation region 125 is displayed, a part of the screen displayed on the touch screen 120 may be hidden or may overlap the operation region 125. Further, the operation region 125 may not be visually displayed.

The shape of the boundary line of the operation region 125 may be substantially the same as the shape of the boundary of the touch screen 120. For example, if the boundary of the touch screen 120 has a rectangular shape, the boundary line of the operation region 125 may have a rectangular shape. Further, the ratio of the width to the length of the rectangle that is formed by the boundary line of the touch screen 120 may be equal to the ratio of the width to the length of the rectangle that is formed by the boundary line of the operation region 125. However, the shape of the boundary line of the operation region 125 may also be different from the shape of the boundary line of the touch screen 120.

The button 110 may be fixedly arranged on a, e.g., lower center, portion of the touch screen 120 regardless of the display of the operation region 125, or the arrangement position of the button 110 may differ depending on whether the operation region 125 is displayed. For example, if the operation region 125 is not displayed, as shown in FIG. 5, the button 110 may be arranged on a lower left corner portion of the touch screen 120, and if the operation region 125 is displayed through the sensing of the press of the button 110, as shown in FIG. 4, the button 110 may be arranged on the lower center portion of the touch screen 120.

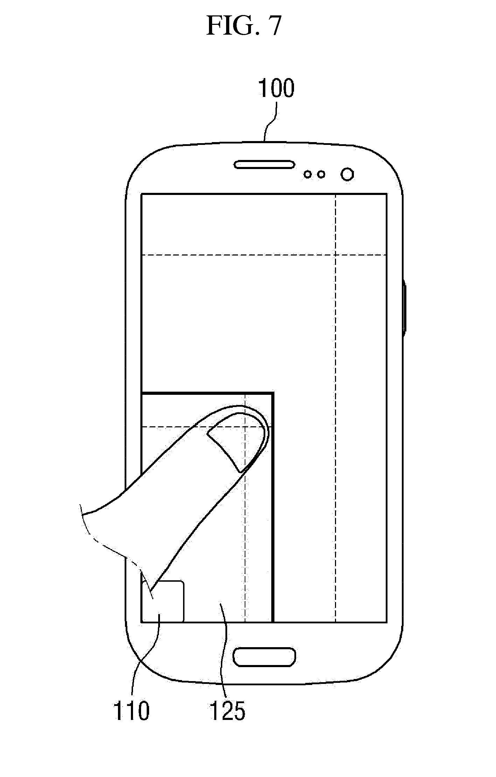

Further, if the operation region 125 is displayed, the button 110 may be arranged on the outside of the operation region 125, as shown in FIG. 4, or may be arranged on the inside of the operation region 125, as shown in FIG. 7. Referring to FIG. 7, if the operation region 125 is arranged to be substantially adjacent to the lower left corner of the touch screen 120, the button 110 may be arranged to be substantially adjacent to the lower left corner of the operation region 125.

Further, whether to display the button 110 may differ depending on whether to display the operation region 125. For example, if the operation region 125 is not displayed, the button 110 may be displayed, while if the operation region 125 is displayed through the sensing of the press of the button 110, the button 110 may not be displayed. In this case, the button 110 may be displayed again by a specific operation.

If the press of the button 110 is sensed again or the press release of the button 110 is sensed again, after the operation region 125 is displayed, the terminal 100 may not display the operation region 125. In other words, the display of the operation region 125 may be toggled depending on the sensing of the press state or press-release state of the button 110.

For example, whenever the press release of the button 110 is sensed, the display of the operation region 125 may be toggled. Further, in another embodiment, if the press of the button 110 is sensed, the operation region 125 may be displayed, while if the press release of the button 110 is sensed, the operation region 125 may not be displayed.

Referring again to FIG. 3, a touch input with respect to a first point in the operation region 125 may be received (S120). The user of the terminal 100 may make the touch input with respect to the first point in the operation region 125 using the thumb of the hand that grasps the terminal 100. The touch input may include a touch event and a touch release event. For example, as shown in FIG. 4, the user may touch an upper right portion in the operation region 125 and then release the touch.

Referring again to FIG. 3, the same operation as an operation that is executed in the case where the touch input is made with respect to a second point that corresponds to the first point in the whole region of the touch screen may be performed (S 130). The second point may be included in the whole region of the touch screen 120. For example, the second point may be included in the remaining region of the touch screen 120, i.e., a region of the touch screen 120 other than the operation region 125. In another example, the second point may be included in the operation region 125 of the whole region of the touch screen 120.

The second point may correspond to the first point. The relative position of the first point in the operation region 125 may correspond to the relative position of the second point in the whole region of the touch screen 120. That is, the relative position in which the first point is arranged in the operation region 125 may be substantially the same as the relative position in which the second point is arranged in the whole region of the touch screen 120.

For example, it is assumed that the shape of the boundary of the operation region 125 is substantially the same as the shape of the boundary of the touch screen 120, and the boundary of the operation region 125 and the boundary of the touch screen 120 are in a rectangular shape. If the operation region 125 is enlarged so that the size of the operation region 125 becomes equal to the size of the whole region of the touch screen 120 in a state where the ratio of the width to the length of the operation region 125 is maintained, the first point and the second point may indicate the same point.

For example, it is assumed that coordinates of a lower left corner of the operation region 125 are (x1, y1), coordinates of an upper right corner of the operation region 125 are (x1', y1'), and coordinates of the first point are (a1, b1). Further, it is assumed that coordinates of a lower left corner of the touch screen 120 are (x2, y2), coordinates of an upper right corner of the touch screen 120 are (x2', y2'), and coordinates of the second point are (a2, b2). The ratio of (x1'-x1) to (a1-x1) may be substantially the same as the ratio of (x2'-x2) to (a2-x2). Further, the ratio of (y1'-y1) to (b1-y1) may be substantially the same as the ratio of (y2'-y2) to (b2-y2).

If the touch input is made with respect to the second point, the controller 140 of the terminal 100 may perform the same operation as the operation being executed. In other words, although the touch input is actually made with respect to the first point in the operation region 125, the terminal 100 may operate as if the touch input were made with respect to the second point. For example, if the touch event and the touch release event are input with respect to the first point in the operation region 125, the controller 140 may perform selection or execution with respect to the second point of the screen that is displayed on the touch screen 120. The executed operation of the controller 140 may differ in accordance with the object displayed at the second point.

In an embodiment, if the second point is included in the operation region 125, the controller 140 may perform no operation. Further, in another embodiment, if the second point is included in the operation region 125, the controller 140 may perform the operation as if the touch input were made with respect to the second point of the screen that is hidden as the operation region 125 is displayed or the screen that overlaps the operation region 125.

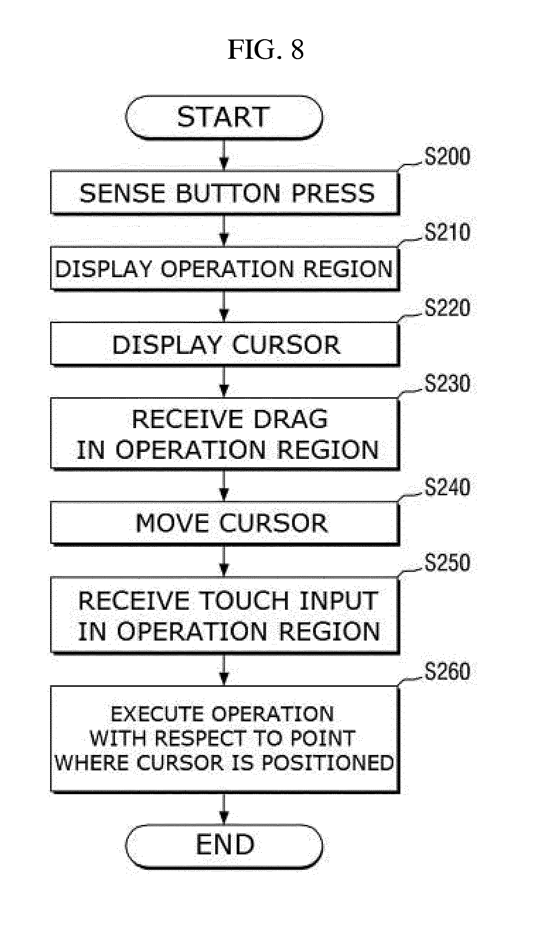

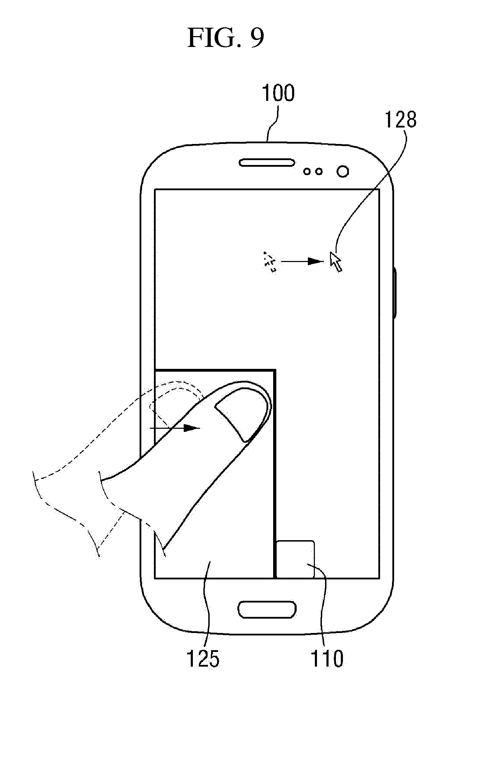

FIG. 8 illustrates a flowchart of processes of a method for operating the terminal 100 according to a second, and FIG. 9 is a plan view of a method for operating the terminal 100 according to the second embodiment.

Referring to FIG. 8, according to the method for operating the terminal 100, a press or a press-release of the button 110 may be first sensed (S200). Depending on embodiments, the following steps may be performed when the press of the button 110 is sensed or when the press release of the button 110 is sensed after the press of the button 110 is performed.

Since the type, the position and the display method of the button 110 according to the second embodiment are the same as those according to the above-described first embodiment, the detailed description thereof will be omitted.

The user of the terminal 100 can press the button 110 using the thumb of the hand that grasps the terminal 100. For example, referring to FIG. 9, the user may touch the button 110 displayed on the touch screen 120, and then release the touch. The touch screen 120 may sense the occurrence of a touch event and a touch-release event, and the terminal 100 may sense the press or the press release of the button 110.

Referring again to FIG. 8, the operation region 125 having a size that is smaller than the size of the touch screen 120 may be displayed (S210). Further, the size of the operation region 125 may be equal to the size of the touch screen 120. Since the position, the display method and the shape of the operation region 125 are the same as those according to the first embodiment as described above, the detailed description thereof will be omitted.

Referring again to FIG. 8, a cursor 128 may be displayed (S220). Referring to FIG. 9, the cursor 128 that has an arrow shape may be displayed on the touch screen 120. The cursor 128 may be displayed (S220) before the operation region 125 is displayed (S210) or the press or the press release of the button 110 is sensed (S200). The cursor 128 may be displayed at a point where the touch input is received from a user or at a predetermined point.

Referring again to FIG. 8, a drag from the first point in the operation region 125 to the second point in the operation region 125 may be received (S230). Specifically, the user of the terminal 100 may touch the first point in the operation region 125 using the thumb of the hand that grasps the terminal 100. In other words, the user may generate a touch event with respect to the first point, and the terminal 100 may sense the touch event. Further, the user may move the thumb to the second point without taking off the thumb from the touch screen 120. Further, the user may take off the thumb from the touch screen 120 at the second point. In other words, the user may generate a touch release event with respect to the second point, and the terminal 100 may sense the touch release event. Through this, the terminal 100 may receive the drag from the first point in the operation region 125 to the second point in the operation region 125.

Next, the cursor 128 may be moved and displayed (S240). Referring to FIG. 9, the moving direction and the moving distance of the cursor 128 may correspond to the direction and the distance of the received drag. In other words, the moving direction and the moving distance of the cursor 128 may have a functional relationship with the direction and the distance of the received drag.

For example, it is assumed that coordinates of the first point are (x1, y1) and coordinates of the second point are (x2, y2). The cursor 128 may move along a first distance (x2-x1) with respect to the x axis and along a second distance (y2-y1) with respect to the y axis. The first distance and the second distance may be equal to each other, or may be different from each other. The detailed value of the first distance or the second distance may be predetermined in the terminal 100 in accordance with the user's intention or regardless of the user's intention.

Next, the touch input with respect to a third point in the operation region 125 may be received (S250). The user of the terminal 100 may make the touch input with respect to the third point in the operation region 125 using the thumb of the hand that grasps the terminal 100. The touch input may include a touch event and a touch release event.

Next, the same operation as the operation that is executed when the touch input is made with respect to the point where the moved cursor 128 is positioned may be performed (S260). The controller 140 of the terminal 100 may perform the same operation as the operation that is executed when the touch input is made with respect to the point where the moved cursor 128 is positioned. In other words, although the touch input is actually made with respect to the third point in the operation region 125, the terminal 100 may operate as if the touch input were made with respect to the point where the cursor 128 is positioned.

For example, if the touch event and the touch release event are input with respect to the third point in the operation region 125, the controller 140 may perform selection or execution with respect to the point, where the cursor 128 is positioned, of the screen that is displayed on the touch screen 120. It may differ depending on the kind of an object that is displayed at the point where the cursor 128 is positioned what operation the controller 140 is to execute.

In an embodiment, if the point where the cursor 128 is positioned is included in the operation region 125, the controller 140 may perform no operation. Further, in another embodiment, if the point where the cursor 128 is positioned is included in the operation region 125, the controller 140 may perform the operation as if the touch input were made with respect to the point, where the cursor 128 is positioned, of the screen that is hidden as the operation region 125 is displayed or the screen that overlaps the operation region 125.

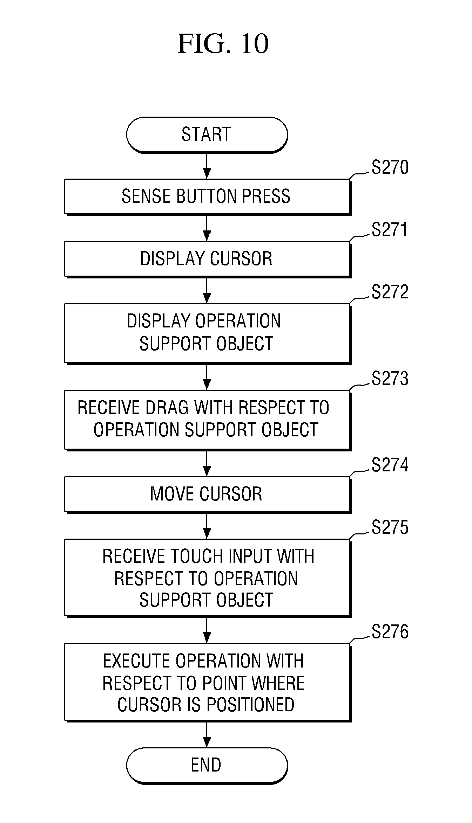

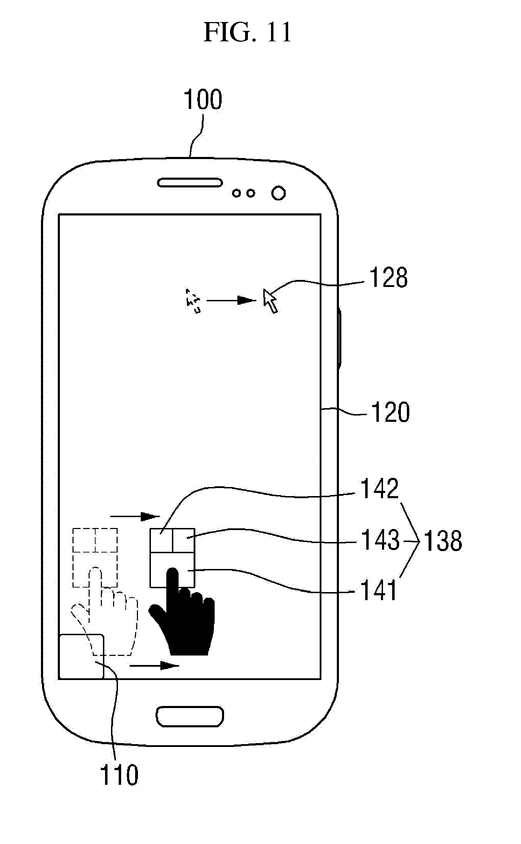

FIG. 10 illustrates a flowchart of processes of a method for operating the terminal 100 according to a third embodiment, and FIG. 11 is a plan view explaining a method for operating the terminal 100 according to the third embodiment.

Referring to FIG. 10, according to the method for operating the terminal 100 according to the third embodiment, a press or a press release of the button 110 may be first sensed (S270). Depending on embodiments, the following steps may be performed when the press of the button 110 is sensed or when the press release of the button 110 is sensed after the press of the button 110 is performed. Since the type, the position and the display method of the button 110 according to the third embodiment are the same as those according to the above-described first embodiment, the detailed description thereof will be omitted.

The user of the terminal 100 can press the button 110 using the thumb of the hand that grasps the terminal 100. For example, referring to FIG. 11, the user may touch the button 110 displayed on the touch screen 120, and then release the touch. The touch screen 120 may sense the occurrence of a touch event and a touch release event, and the terminal 100 may sense the press or the press release of the button 110.

Referring again to FIG. 10, the cursor 128 may be displayed (S271). Referring to FIG. 11, the cursor 128 that has an arrow shape may be displayed on the touch screen 120. The display of the cursor 128 (S271) may be performed before the press or the press release of the button 110 is sensed (S270). The cursor 128 may be displayed at a point where the touch input is received from the user, or may be displayed at a predetermined point.

Referring again to FIG. 10, an operation support object 138 may be displayed (S272). The operation support object 138 may be displayed on the touch screen 120. The operation support object 138 may be displayed at a point where the touch input is received from the user, or may be displayed at a predetermined point. In the case where the operation support object 138 is displayed at the predetermined point, the operation support object 138 may be displayed in the white region WR in FIG. 2. In other words, the operation support object 138 may be displayed in a region that the thumb of the user's hand that grasps the terminal 100 can reach in the region of the touch screen 120.

The operation support object 138 may be displayed on the touch screen 120 so that the user can visually confirm the operation support object 138. The operation support object 138 may be displayed, e.g., as an icon. The operation support object 138 may be displayed opaquely, semi-transparently, or transparently. According to another embodiment, only the outline of the operation support object 138 may be displayed. As the operation support object 138 is displayed, a part of the screen that is displayed on the touch screen 120 may be hidden or may overlap the operation support object 138. Further, the operation support object 138 may not be visually displayed.

Referring to FIG. 11, the operation support object 138 may include a first sub-object 141, a second sub-object 142, and a third sub-object 143. If the first sub-object 141 is dragged, the first sub-object 141, the second sub-object 142, and the third sub-object 143 may move together on the screen as a group. Further, if the first sub-object 141 is dragged, the terminal 100 may move the displayed cursor 128 in accordance with the dragging direction and the dragging distance of the first sub-object 141.

If the user takes off the finger from the touch screen 120 after completing the dragging, the operation support object 138 may move to and be displayed at the point where the operation support object 138 was positioned before the drag of the first sub-object 141 is input. Through this, the operation support object 138 may always be displayed in a region where the user's operation is possible.

If the touch input on the second sub-object 142 or the third sub-object 143 is received from the user, a predetermined operation may be performed with respect to the point where the cursor 128 is positioned. For example, if the touch input on the second sub-object 142 or the third sub-object 143 is received, the same operation as the operation that is executed when the touch input is made at the point where the cursor 128 is positioned. According to another embodiment, if the touch input on the second sub-object 142 or the third sub-object 143 is received, e.g., a pop-up menu, or the like, may be displayed at the point where the cursor 128 is positioned.

Referring again to FIG. 10, a drag of the operation support object 138 may be received (S273). Specifically, the user of the terminal 100 may touch the first point at which the first sub-object 141 of the operation support object 138 is positioned using the thumb of the hand that grasps the terminal 100. Further, the user can move the thumb to the second point in a state where the user does not take off the thumb from the touch screen 120. Through this, the terminal 100 may receive the drag of the operation support object 138.

Next, the displayed cursor 128 may be moved and displayed (S274). Referring to FIG. 11, the moving direction and the moving distance of the cursor 128 may correspond to the direction and the distance of the received drag. In other words, the moving direction and the moving distance of the cursor 128 may have a functional relationship with the direction and the distance of the received drag.

For example, it is assumed that coordinates of the first point are (x1, y1) and coordinates of the second point are (x2, y2). The cursor 128 may move along a first distance (x2-x1) with respect to the x axis and along a second distance (y2-y1) with respect to the y axis. The first distance and the second distance may be equal to each other, or may be different from each other. The detailed value of the first distance or the second distance may be predetermined in the terminal 100 in accordance with the user's intention or regardless of the user's intention.

Further, the moving distance of the cursor 128 may correspond to time in which the user's finger touches the touch screen 120. In other words, the moving distance of the cursor 128 may have a functional relationship with the time in which the user's finger touches the touch screen 120.

For example, it is assumed that the user's finger moves to the second point in a state where the user does not take off the finger from the first point where the operation support object 138 is positioned after the first point is touched. Further, it is assumed that when a predetermined time elapses after the user's finger moves to the second point, the user separates the finger from the touch screen 120.

The moving direction of the cursor 128 may correspond to the direction from the first point to the second point. Further, the moving distance of the cursor 128 may correspond to the time in which the user's finger moves to the second point and then the finger is separated from the touch screen 120. For example, the moving distance of the cursor 120 may be in proportional to the time.

Next, the touch input on the operation support object 138 may be received (S275). The user of the terminal 100 may make the touch input on the operation support object 138 using the thumb of the hand that grasps the terminal 100. The user may make the touch input on the second sub-object 142 or the third sub-object 143 of the operation support object 138.

Next, the same operation as the operation, which is performed in the case that the touch input is made at the point where the moved cursor 128 is positioned, may be performed (S276). The controller 140 of the terminal 100 may perform the same operation as the operation, which is performed in the case that the touch input is made at the point where the moved cursor 128 is positioned. In other words, although the touch input is actually made on the operation support object 138, the terminal 100 may operate as if the touch input was made on the point where the cursor 128 is positioned.

For example, if a touch event or a touch release event is input with respect to the operation support object 138, the controller 140 may execute an operation, such as a selection or an execution, with respect to the point where the cursor 128 is positioned on the screen that is displayed on the touch screen 120. It may differ depending on the kind of the object, which is displayed at the point where the cursor 128 is positioned, what operation the controller 140 is to execute.

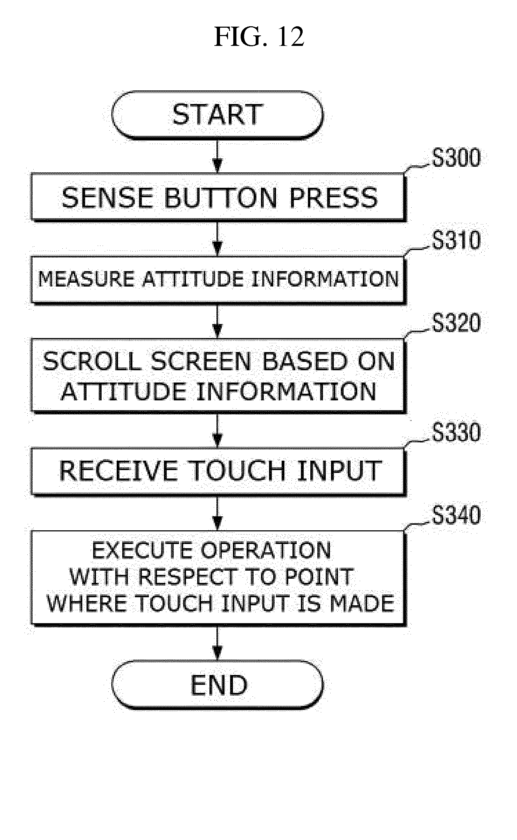

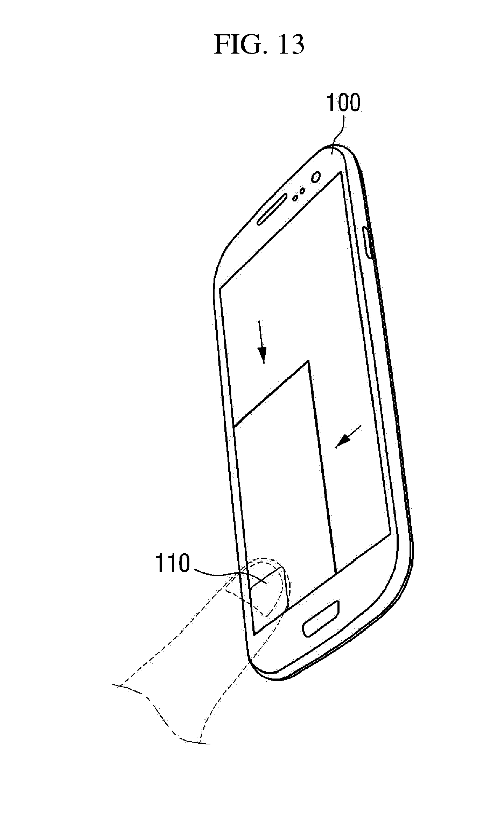

FIG. 12 illustrates a flowchart of processes of a method for operating a terminal according to a fourth embodiment of the example embodiments, and FIG. 13 is a plan view explaining a method for operating a terminal according to the fourth embodiment of the example embodiments.

Referring to FIG. 12, in the method for operating the terminal 100 according to the fourth embodiment of the example embodiments, a press or a press release of the button 110 may be first sensed (S300). Depending on embodiments, the following steps may be performed when the press of the button 110 is sensed or when the press release of the button 110 is sensed after the press of the button 110 is performed. Since the type, the position, and the display method of the button 110 according to the fourth embodiment of the example embodiments are the same as those according to the first embodiment as described above, the detailed explanation thereof will be omitted.

The user of the terminal 100 may press the button 110 using the thumb of the hand that grasps the terminal 100. For example, referring to FIG. 13, the user may touch the button 110 that is displayed on the touch screen 120, and then release the touch. The touch screen 120 can sense the occurrence of the touch event and the touch release event, and the terminal 100 can sense the press or the press release of the button 110.

Referring again to FIG. 12, attitude information of the terminal 100 may be measured (S310). The attitude information of the terminal 100 may be measured by an attitude sensor 130. The attitude sensor 130 may include a gravity sensor, a gyroscope, or a geomagnetic sensor. The attitude sensor 130 may measure the attitude information, e.g., a tilt, an acceleration, or an angular velocity of the terminal 100.

Next, the screen that is displayed on the touch screen 120 may be scrolled based on the measured attitude information (S320). The controller 140 may detect the tilt of the terminal 100 based on the vertical direction using the measured attitude information. In other words, the controller 140 may detect the rotating angle and the rotating direction of the terminal 100 based on the vertical direction.

Referring to FIG. 13, the controller 140 may scroll the screen that is displayed on the touch screen 120 based on the detected rotating angle and rotating direction. The controller 140 may scroll the screen that is displayed on the touch screen 120 at a specific speed and in a specific direction based on the detected rotating direction and rotating angle. For example, the controller 140 may scroll the screen at a speed that is proportional to the detected rotating angle. In other words, the controller 140 may scroll the screen at higher speed as the detected rotating angle becomes larger.

Further, in another embodiment, the controller 140 may not scroll the screen if the detected rotating angle is smaller than a specific angle, but may scroll the screen at constant speed if the detected rotating angle is equal to or larger than the specific angle. The specific angle may be, e.g., 45 degrees.

Further, in another embodiment, the controller 140 may not scroll the screen if the detected rotating angle is smaller than a specific angle, but may scroll the screen at a speed that is proportional to the detected rotating angle if the detected rotating angle is equal to or larger than the specific angle. In other words, if the detected rotating angle is smaller than the specific angle, the controller 140 does not scroll the screen, while if the detected rotating angle is equal to or larger than the specific angle, the controller 140 may scroll the screen at higher speed as the detected rotating angle becomes larger.

Further, the controller 140 may scroll the screen in a direction that corresponds to the rotating direction of the terminal 100 based on the vertical direction. For example, it is assumed that the terminal 100 is rotated so that a first side of four sides included in the touch screen 120 having a rectangular shape is positioned at a height that is lower than a second side that faces the first side, and a third side of the two sides that are adjacent to the first side is positioned at a height that is lower than a fourth side that faces the third side. The controller 140 may scroll the screen in a direction of a vector sum of a vector which is directed from the second side to the first side and a vector which is directed from the fourth side to the third side.

Accordingly, the user of the terminal 100 may make the screen that is displayed on the touch screen 120 be scrolled through tilting of the terminal 100. The user of the terminal 100 may make the screen that is displayed in the shaded region of FIG. 2 be scrolled and displayed in the white region of FIG. 2 through tilting of the terminal 100. In other words, the user of the terminal 100 may make the screen, which is displayed in a region that the thumb of the hand that grasps the terminal 100 is unable to reach, be scrolled and displayed in a region that the thumb can reach through tilting of the terminal 100.

Further, if the press of the button 110 is sensed again or the press release of the button 110 is sensed again, the controller 140 may make the screen not scrolled any further. In other words, whether to scroll the screen may be toggled depending on the sensing of the press state or the press-release state of the button 110. For example, whenever the press release of the button 110 is sensed, whether to scroll the screen may be toggled. Further, in another embodiment, if the press of the button 110 is sensed, the screen may be scrolled, while if the press release of the button 110 is sensed, the screen may not be scrolled.

Referring again to FIG. 12, a touch input with respect to a certain point in the touch screen 120 may be received (S330). The user of the terminal 100 may make the touch input with respect to the certain point in the touch screen 120 using the thumb of the hand that grasps the terminal 100. The touch input may include a touch event and a touch release event.

Next, the operation may be performed with respect to the point where the touch input is made (S340). For example, if the touch event and the touch release event are input with respect to the point where the touch input is made, the controller 140 may perform the selection or execution with respect to the point where the touch input is made. It may differ depending on the kind of an object that is displayed at the point where the touch input is made what operation the controller 140 is to execute.

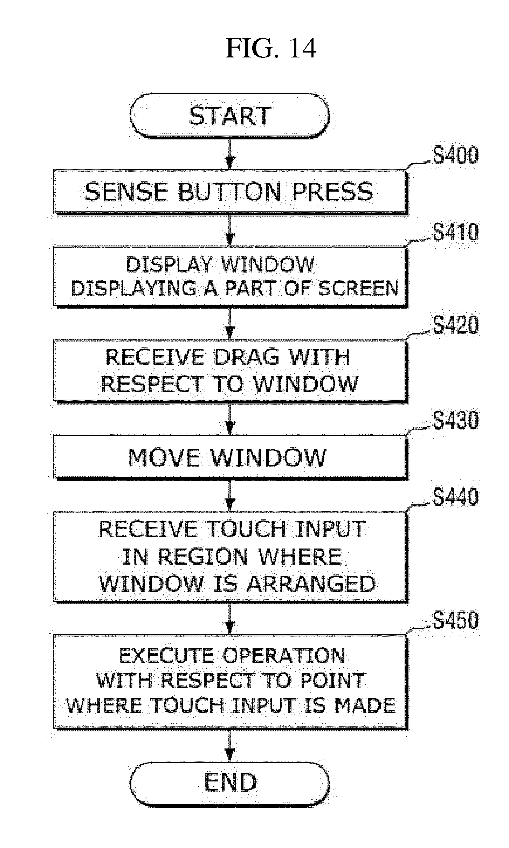

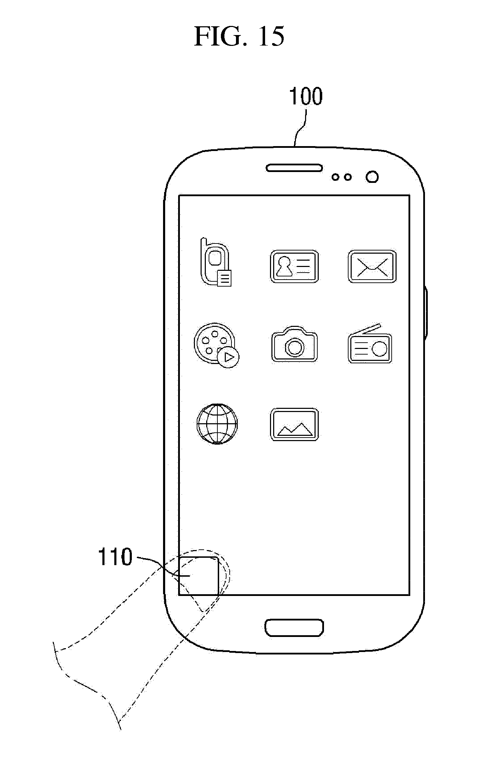

FIG. 14 illustrates a flowchart of processes of a method for operating the terminal 100 according to a fifth embodiment of the example embodiments, and FIGS. 15 to 17 are plan views explaining a method for operating the terminal 100 according to the fourth embodiment of the example embodiments.

Referring to FIG. 14, according to the method for operating the terminal 100 according to the fifth embodiment of the example embodiments, a press or a press release of the button 110 may be first sensed (S400). Depending on embodiments, the following steps may be performed when the press of the button 110 is sensed or when the press release of the button 110 is sensed after the press of the button 110 is performed. Since the type, the position and the display method of the button 110 according to the fifth embodiment of the example embodiments are the same as those according to the above-described first embodiment, the detailed description thereof will be omitted.

The user of the terminal 100 can press the button 110 using the thumb of the hand that grasps the terminal 100. For example, referring to FIG. 15, the button 110 may be displayed in a region which the thumb of the user's hand that grasps the terminal can reach. The user may touch the button 110 displayed on the touch screen 120, and then release the touch. The touch screen 120 may sense the occurrence of a touch event and a touch-release event, and the terminal 100 may sense the press or the press release of the button 110.

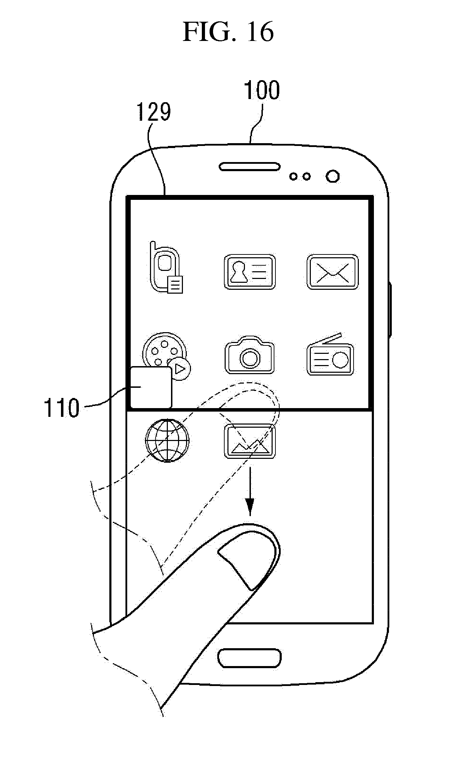

Referring again to FIG. 14, a window for displaying a part of the screen displayed on the touch screen 120 may be displayed (S410). Referring to FIG. 16, the controller 140 may generate a new window 129 and display the generated window 129 on the touch screen 120. As shown in FIG. 16, a boundary of the window 129 may be displayed or may not be displayed.

At least a part of the region where the window 129 is displayed may be included in the white region of FIG. 2. In other words, at least a part of the region where the window 129 is displayed may be included in the region which the thumb of the user's hand that grasps the terminal 100 can reach. Referring to FIG. 16, the window 129 may be arranged in an upper region of the touch screen 120. The window 129 may be arranged so that the thumb of the user's hand that grasps the terminal 100 can reach a lower portion of the window 129.

The window 129 may display a part of the screen which is to be displayed unless the window 129 is displayed on the touch screen 120. The window 129 may display the screen that corresponds to a specific region of the screen which is to be displayed unless the window 129 is displayed on the touch screen 120. For example, the window 129 may display the screen that corresponds to the region, in which the window 129 is arranged, of the screen which is to be displayed unless the window 129 is displayed. Referring to FIG. 16, the window 129 may display the screen, which corresponds to an upper region of the touch screen 120, among the screen which is to be displayed unless the window 129 is displayed.

At least a part of the screen, which corresponds to the shaded region of FIG. 2, among the screen which is to be displayed unless the window 129 is displayed, may be displayed on the window 129. In other words, at least a part of the screen, which corresponds to the region that the thumb of the user's hand grasping the terminal can reach, among the screen which is to be displayed unless the window 129 is displayed may be displayed.

For example, as shown in FIG. 16, the button 110 may be displayed inside the region where the window 129 is arranged. In another example, the button 110 may be displayed in a position where the button 110 is arranged before the window 129 is displayed even if the window 129 is displayed, e.g., the button 110 may remain in the bottom left corner as in FIG. 15.

Further, if the press of the button 110 is sensed again or the press release of the button 110 is sensed again, the controller 140 may make the window 129 not displayed. In other words, whether to display the window 129 may be toggled depending on the sensing of the press state or the press-release state of the button 110. Accordingly, whether to display the window 129 may be toggled. For example, whenever the press release of the button 110 is sensed, whether to display the window 129 may be toggled. Further, in another embodiment, if the press of the button 110 is sensed, the window 129 is displayed, while if the press release of the button 110 is sensed, the window 129 may not be displayed.

Referring again to FIG. 14, a drag from a first point in a region where the window 129 is arranged to a second point in the touch screen 120 may be received (S420). Specifically, the user of the terminal 100 may touch the first point in the region where the window 129 is arranged using he thumb of the hand that grasps the terminal 100. In other words, the user may generate a touch event with respect to the first point and the terminal 100 may sense the touch event. Further, the user may move the thumb to the second point in the touch screen 120 without taking off the thumb from the touch screen 120. Further, the user may take off the thumb from the touch screen 120 at the second point. In other words, the user may generate a touch release event with respect to the second point, and the terminal 100 may sense the touch release event. Through this, the terminal 100 may receive the drag from the first point in the region where the window 129 is arranged to the second point in the touch screen 120. For example, referring to FIG. 16, the user may input the drag from the point in the region where the window 129 is arranged to the lower side using the thumb of the hand that grasps the terminal 100.

Referring again to FIG. 14, the window 129 may be moved and displayed (S430). The moving direction and the moving distance of the window 129 may correspond to the direction and the distance of the received drag. For example, it is assumed that coordinates of the first point are (x1, y1) and coordinates of the second point are (x2, y2). The window 129 may move along integer distance of (x2 - x1) with respect to the x axis and along integer distance of (y2 - y1) with respect to the y axis.

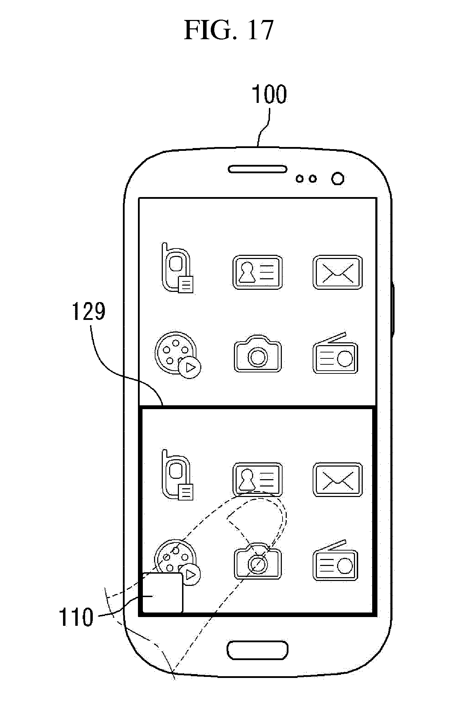

For example, referring to FIGS. 15-17, the window 129 may be moved from the position where the window 129 is arranged before the drag is input to the lower side to be displayed, i.e., from the top of the touch screen 120 in FIG. 16 to a bottom of the touch screen 120 in FIG. 17. Through this, at least a part of the screen that corresponds to the region, which the thumb of the user's hand that grasps the terminal 100 is unable to reach, of the screen that is displayed on the whole region of the touch screen 120 may be moved and displayed in the region which the thumb of the user's hand that grasps the terminal 100 can reach.

Referring again to FIG. 14, a touch input with respect to a third point in the region where the moved window 129 is arranged may be received (S440). The user of the terminal 100 may make the touch input with respect to the third point in the region where the moved window 129 is arranged using the thumb of the hand that grasps the terminal 100. The touch input may include a touch event and a touch release event. Through this, the touch input may be made with respect to at least a part of the screen that corresponds to the region which the thumb of the user's hand that grasps the terminal 100 is unable to reach before the window 129 is displayed.

Next, the operation may be performed with respect to the point where the touch input is made (S450). For example, if the touch event and the touch release event are input with respect to the point where the touch input is made, the controller 140 may perform selection or execution with respect to the point where the touch input is made. It may differ depending on the kind of an object that is displayed at the point where the touch input is made what operation the controller 140 is to execute. Through this, the operation may be performed with respect to at least a part of the screen that corresponds to the region which the thumb of the user's hand that grasps the terminal 100 is unable to reach before the window 129 is displayed.

As described above, according to embodiments, the user can operate the terminal 100 more easily. For example, the user can operate the screen that corresponds to the entire region of the touch screen 120 through operation within a specific region of the touch screen 120 of the terminal 100, which is smaller than the entire region of the touch screen 120. Further, the specific region of the touch screen 120 can be reached by a thumb of the user from the same hand holding the terminal 100. In other words, the user of the terminal 100 can operate the screen of the entire touch screen 120, including areas of the screen which the user's thumb from the same hand holding the terminal 100 is unable to reach, from a specific region and by the user's thumb from the same hand as the hand that grasps the terminal 100.

In contrast, when a user operates a conventional mobile terminal that includes a large touch screen as an input device and an output device, the user may be unable to operate the whole region of the touch screen by using only the thumb of the user's hand that grasps the mobile terminal. That is, while the user's hand grasps the mobile terminal, the thumb of the grasping hand is physically not capable of reaching further regions of a large touch screen.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the example embodiments as set forth in the following claims.

## Claims

1. A terminal (100), comprising:
a button (110);
a touch screen (120) configured to receive a touch input from an outside and to display a display screen; and
a controller (140) configured to control the display screen of the touch screen (120) in accordance with a state of the button (110) and the received touch input, the state of the button (110) being pressed or press-released,
wherein, if a press or a press release of the button (110) is sensed, the controller (140) is configured to display on the display screen of the touch screen (120) an operation region (125) having a size that is smaller than a size of the display screen, and
wherein, if the touch input is at a first point within the operation region (125), the controller (140) is configured to execute a same operation as an operation executed in response to a touch input at a second point corresponding to the first point, the second point being within an entire region of the display screen of the touch screen (120).

2. The terminal as claimed in claim 1, wherein:
a boundary of the operation region (125) and a boundary of the touch screen (120) are rectangular, and
if coordinates of a lower left corner of the operation region (125) are (x1, y1), coordinates of an upper right corner of the operation region (125) are (x1', y1'), coordinates of the first point are (a1, b1), coordinates of a lower left corner of the touch screen are (x2, y2), coordinates of an upper right corner of the touch screen (120) are (x2', y2'), and coordinates of the second point are (a2, b2), a ratio of (x1' - x1) to (a1 - x1) is substantially the same as a ratio of (x2' - x2) to (a2 - x2), and a ratio of (y1' - y1) to (b1 - y1) is substantially the same as a ratio of (y2' - y2) to (b2 - y2).

3. A terminal (100), comprising:
a button (110);
a touch screen (120) configured to receive a touch input from an outside and to display a display screen; and
a controller (140) configured to control the display screen of the touch screen (120) in accordance with a state of the button (110) and the received touch input, the state of the button (110) being pressed or press-released,
wherein, if a press or a press release of the button (110) is sensed, the controller (140) is configured to display on the display screen of the touch screen (120) an operation region (125) having a size that is smaller than a size of the display screen, and to display on the display screen of the touch screen (120) a cursor (128),
if a drag from a first point in the operation region (125) to a second point in the operation region (125) is received, the controller (140) is configured to move the cursor (128) to a cursor position, and
if the touch input is received at a third point in the operation region (125), the controller (140) is configured to execute a same operation as an operation executed in response to a touch input at the cursor position.

4. The terminal as claimed in claim 3, wherein if coordinates of the first point are (x1, y1) and coordinates of the second point are (x2, y2), the controller is configured to move the cursor along a distance (x2 - x1) with respect to an x axis and along a distance (y2 - y1) with respect to a y axis.

5. A terminal (100), comprising:
a button (110);
a touch screen (120) configured to receive a touch input from an outside and to display a display screen on a touch screen (120);
an attitude sensor (130) configured for measuring attitude information and
a controller (140) configured to control the display screen of the touch screen (120) in accordance with a state of the button (110), the received touch input, and the measured attitude information, the state of the button (110) being pressed or press-released,
wherein the attitude sensor (130) is configured to measure attitude information of the terminal, if a press or a press release of the button (110) is sensed, and
wherein the controller (140) is configured to scroll the display screen of the touch screen (120) based on the measured attitude information, and if the touch input is received at a certain point in the touch screen (120), the controller executes an operation with respect to the point where the touch input is made.

6. The terminal as claimed in claim 5, wherein:
the controller is configured to detect a rotating angle and a rotating direction of the terminal based on a vertical direction using the measured attitude information, and
the controller is configured to scroll the screen at a specific speed and in a specific direction based on the detected rotating angle and rotating direction.

7. The terminal (100) as claimed in claim 5 or 6, wherein the touch screen (120) is rectangular, and the controller (140) is configured to scroll the screen in a direction of a vector sum of a vector which is directed from a first side of four sides included in the touch screen (120) to a second side that faces the first side and is positioned at a height that is lower or equal to the first side and a vector which is directed from a third side of the two sides that are adjacent to the first side to a fourth side that faces the third side and is positioned at a height that is lower than or equal to the third side.

8. A terminal (100), comprising:
a button (110);
a touch screen (120) configured to receive a touch input from an outside and to display a display screen; and
a controller (140) configured to control the display screen of the touch screen (120) in accordance with a state of the button (110) and the received touch input, the state of the button (110) being pressed or press-released,
wherein if a press or a press release of the button (110) is sensed, the controller (140) is configured to display a window (129) for displaying a part of the screen displayed on the touch screen (120),
wherein, if a drag from a first point in a region where the window (129) is arranged to a second point in the touch screen is received, the controller (140) is configured to move the displayed window (129), and
wherein, if the touch input is received at a third point in a region where the moved window (129) is arranged, the controller (140) is configured to execute an operation with respect to a point where the touch input is made.

9. The terminal as claimed in claim 8, wherein if coordinates of the first point are (x1, y1) and coordinates of the second point are (x2, y2), the controller (140) is configured to move the window (129) along distance (x2 - x1) with respect to an x axis and along distance (y2 - y1) with respect to a y axis.

10. A method for operating a terminal (100) including a button (110) and a touch screen (120), the method comprising:
sensing (S100) a press or a press release of the button (110);
displaying (S110) on a display screen of the touch screen (120) an operation region (125) having a size that is smaller than a size of the display screen;
receiving (S120) a touch input at a first point in the operation region (125); and
executing (S130) a same operation as an operation executed in response to a touch input at a second point corresponding to the first point, the second point being within an entire region of the display screen of the touch screen (120).

11. A method for operating a terminal (100) including a button (110) and a touch screen (120), the method comprising:
sensing (S200) a press or a press release of the button (110);
displaying (S210) on a display screen of the touch screen (120) an operation region (125) having a size that is smaller than a size of the display screen;
displaying (S220) a cursor (128) on the display screen of the touch screen (120);
receiving (S230) a drag from a first point in the operation region (125) to a second point in the operation region (125);
moving (S240) the displayed cursor (128) to a cursor position;
receiving (S250) a touch input at a third point in the operation region (125); and
executing (S260) a same operation as an operation executed in response to a touch input at the cursor position.

12. A method for operating a terminal (100) including a button (110) and a touch screen (120), the method comprising:
sensing (S300) a press or a press release of the button (110);
measuring (S310) attitude information of the terminal (120);
scrolling (S320) a screen displayed on the touch screen (120) based on the measuredattitude information;
receiving (S330) a touch input at a certain point in the touch screen (120); and
executing (S340) an operation with respect to the point where the touch input is made.

13. A method for operating a terminal (100) including a button (110) and a touch screen (120), the method comprising:
sensing (S400) a press or a press release of the button (110);
displaying (S410) a window (129) for displaying a part of a screen that is displayed on the touch screen (120) on the touch screen (120);
receiving (S420) a drag from a first point in a region where the window (129) is arranged to a second point in the touch screen (120);
moving (S430) the displayed window (129);
receiving (S440) a touch input at a third point in a region where the moved window (129) is arranged; and
executing (S450) an operation with respect to a point where the touch input is made.

14. A terminal (100), comprising:
a touch screen (120) configured to receive a touch input from an outside and to display a screen; and
a controller (140) configured to control the screen displayed on the touch screen (120) in accordance with the received touch input,
wherein the controller (140) displays a cursor (128) on the touch screen (120),
wherein, if a drag from a first point on the touch screen to a second point on the touch screen (120) is received, the controller (140) moves the displayed cursor (128), and, if the touch input is received at a third point on the touch screen (120), the controller (140) executes a same operation as an operation executed in response to a touch input at a point where the moved cursor (128) is positioned.

15. The terminal (100) as claimed in claim 14, wherein, if coordinates of the first point are (x1, y1) and coordinates of the second point are (x2, y2), the controller moves the cursor along distance (x2 - x1) with respect to an x axis and moves the cursor along distance (y2 - y1) with respect to a y axis.

16. A terminal (100), comprising:
a button (110);
a touch screen (120) configured to receive a touch input from an outside and to display a screen; and
a controller (140) configured to control the screen displayed on the touch screen (120) in accordance with the received touch input,
wherein, if a press or a press release of the button (110) is sensed, the controller (140) is configured to display a cursor (128) on the touch screen (120) and to display an operation support object (138) on the touch screen (120),
wherein, if a drag of the operation support object (138) is received, the controller (140) is configured to move the displayed cursor (128), and if the touch input is received on the operation support object (138), the controller (140) is configured to execute a same operation as an operation executed in response to a touch input at a point where the moved cursor (128) is positioned.

17. The terminal as claimed in claim 16, wherein:
the operation support object (138) includes a first sub-object (141) and a second sub-object (142, 143), and
if a drag of the first sub-object (141) is received, the controller (140) moves the displayed cursor (128), and if the touch input is received on the second sub-object (142, 143)), the controller (140) executes a same operation as an operation executed in response to a touch input at a point where the moved cursor is positioned.

18. A method for operating a terminal (100) including a button (110) and a touch screen (120), the method comprising:
sensing (S270) a press or a press release of the button (110);
displaying (S271) a cursor on the touch screen (120);
displaying (S272) an operation support object (138) on the touch screen (120);
receiving (S273) a drag of the operation support object (138);
moving (S274) the displayed cursor (128);
receiving (S275) a touch input on the operation support object (138); and
executing (S276) a same operation as an operation executed in response to a touch input at a point where the moved cursor (128) is positioned.

19. The method as claimed in claim 18, wherein:
the operation support object (138) includes a first sub-object (141) and a second sub-object (142, 143),
receiving the drag of the operation support object (138) includes receiving a drag of the first sub-object (141), and
receiving the touch input on the operation support object (138) includes receiving the touch input on the second sub-object (142, 143).
